# EUROPÄISCHE PATENTSCHRIFT

(11) **EP 2 494 226 B1**
(45) Veröffentlichungstag und Bekanntmachung des Hinweises auf die Patenterteilung: **02.09.2015**
(21) Anmeldenummer: 10786992.7
(22) Anmeldetag: 18.10.2010
(51) Int. Cl.: F16D 13/04

(54) **NASSKUPPLUNG**
WET CLUTCH
EMBRAYAGE HUMIDE

(30) Priorität: 29.10.2009 DE 102009051243; 21.12.2009 DE 102009059738
(43) Veröffentlichungstag der Anmeldung: 05.09.2012
(73) Patentinhaber: Schaeffler Technologies AG & Co. KG, 91074 Herzogenaurach (DE)
(72) Erfinder: SIMON, Yannick, 3853 Münchenbuchsee (CH); RABER, Christoph, 66564 Ottweiler-Steinbach (DE); WITTMANN, Christoph, 77815 Bühl (DE)
(86) Internationale Anmeldenummer: PCT/DE2010/001227
(87) Internationale Veröffentlichungsnummer: WO 2011/050775

(56) Entgegenhaltungen:
- EP-A1- 0 728 958
- GB-A- 2 251 465
- JP-A- 2005 344 920
- US-A- 4 645 049
- US-A1- 2005 167 229

## Beschreibung

Die Erfindung betrifft eine Nasskupplung, angeordnet zwischen einer Kurbelwelle einer Brennkraftmaschine und einer Getriebeeingangswelle eines Getriebes in einem Antriebsstrang insbesondere für ein Motorrad, mit einer Hauptkupplung enthaltend einen mit der Kurbelwelle wirksam verbundenen, ein Eingangsteil bildenden Kupplungskorb mit drehfest und axial begrenzt verlagerbar in diesem aufgenommenen Lamellen und einem mit der Getriebeeingangswelle verbundenen, ein Ausgangsteil bildenden Kupplungskern mit abwechselnd mit den Lamellen geschichteten, drehfest und axial begrenzt verlagerbar aufgenommenen Gegenlamellen.

Gattungsgemäße Nasskupplungen insbesondere in Motorrädern sind beispielsweise aus der EP 1 780 432 A1 bekannt. Hierbei werden in einem Kupplungskorb, der als Eingangsteil der Nasskupplung dient und mit der Kurbelwelle wirksam verbunden ist, Lamellen axial abwechselnd mit Gegenlamellen, die auf einem mit der Getriebeeingangswelle eines Getriebes wirksam verbundenen und als Ausgangsteil der Nasskupplung dienenden Kupplungskern drehfest verbunden sind, axial geschichtet und von einem Hebelelement wie Tellerfeder axial verspannt. Die Betätigungskraft der Nasskupplung ergibt sich aus der nötigen Vorspannkraft des Hebelelements gegenüber den Lamellen und Gegenlamellen, um das von der Brennkraftmaschine bereitgestellte Drehmoment zu übertragen. Mit zunehmendem Nenndrehmoment der Brennkraftmaschine nimmt daher die notwendige Betätigungskraft beziehungsweise bei entsprechender Übersetzung der Ausrückweg am Kupplungshebel zu. Dabei bleibt die zu verrichtende Arbeit zur Öffnung der Nasskupplung gleich.

Im Weiteren neigen derartige Antriebsstränge mit leistungsstarken Brennkraftmaschinen bei Motorrädern bei Rückschaltungen im Schub zum Stempeln des Hinterrads, da dieses das hier auftretende Schubmoment der Brennkraftmaschine nicht ausreichend gegenhalten kann und die Haftung zur Straße abbricht. Zur Vermeidung dieses Stempelns wird eine zeitweise Abkoppelung der Brennkraftmaschine vom Getriebe mittels einer Rampeneinrichtung vorgeschlagen.

Aus der GB2251465 ist eine Kupplung für einen Traktor bekannt, bestehend aus Vorsteuerund Hauptsteurkupplung die über ein Rampensystem miteinander verbunden sind.

Aufgabe der Erfindung ist daher, die zu verrichtende Arbeit bei der Betätigung einer Nasskupplung zu verringern, indem beispielsweise bei gleichem Ausrückweg die Betätigungskraft verringert wird. Weiterhin soll eine derartige Nasskupplung eine Vorrichtung zur Vermeidung von Stempeln (Anti-hopping-system) enthalten.

Die Aufgabe wird durch eine Nasskupplung mit den Merkmalen von Anspruch 1 gelöst.

Eine derartige Nasskupplung stellt eine sogenannte Booster-Kupplung dar, bei der lediglich die geringe Betätigungskraft für die kleinere Vorkupplung aufgebracht wird und abhängig von deren Betätigungszustand die Hauptkupplung durch das von der Brennkraftmaschine aufgebrachte Drehmoment betätigt wird. Hierbei kann die Vorkupplung als Nasskupplung mit einem Kupptungskorb und einem Kupplungskern sowie dazwischen abwechselnd geschichteten Lamellen und Gegenlamellen oder als trockene Reibungskupplung mit einer von dem Hebelelement gegenüber einer Gegendruckplatte unter Zwischenlegung von Reibbelägen einer Kupplungsscheibe beaufschlagten Anpressplatte ausgebildet sein. Beispielsweise kann vorgesehen sein, dass die Vorkupplung auf ein übertragbares Drehmoment zwischen 40 Nm und 100 Nm ausgelegt ist. Die Hauptkupplung kann beispielsweise auf ein übertragbares Drehmoment von 100 Nm bis über 200 Nm ausgelegt sein, wobei die Hauptkupplung ein mehrfaches Drehmoment des übertragbaren Drehmoments der Vorkupplung übertragen kann. Dementsprechend ist die Betätigungskraft der Nasskupplung auf die Betätigungskraft der Vorkupplung reduziert, so dass beispielsweise eine Nasskupplung mit einem übertragbaren Drehmoment von 250 Nm Betätigungskräfte einer Nasskupplung mit 80 Nm aufweist.

Im geschlossenen Zustand der Vorkupplung überträgt diese das anliegende Drehmoment der Brennkraftmaschine auf die Rampeneinrichtung, so dass deren Rampenringen mit in Umfangsrichtung steigenden Rampen die Lamellen und Gegenlamellen der Hauptkupplung axial gegeneinander verspannen und damit die Hauptkupplung schließen. Die Rampeneinrichtung mit ihren Rampenringen mit komplementär zueinander angeordneten Rampen wirkt dabei wie eine Schraubverbindung, die bei geschlossener Vorkupplung die Hauptkupplung quasi zuschraubt. Wird durch die Betätigung des Hebelelements die Vorkupplung gelöst, wird die Rampeneinrichtung entlastet, so dass die Hauptkupplung ebenfalls gelöst wird. Hierbei kann die Rampeneinrichtung mittels zweier aufeinander gelagerter Rampenringe mit komplementär zueinander angeordneten Rampen gebildet sein. In besonders vorteilhafter Weise können die Rampenringe komplementär zueinander eingesenkte Rampen aufweisen, die ausgehend von einer Nulllage in beide Umfangsrichtungen (Schub- und Zugrichtung) ansteigen und in deren Laufbahnen Kugeln abwälzen. Dabei erfolgt bei einem Wechsel von einem Zug- in einen Schubbetrieb und umgekehrt jeweils eine Relativverdrehung der Rampenringe zueinander mit einem Nulldurchgang, an dem die Hauptkupplung kurzzeitig geöffnet ist. Dabei kann infolge der Verspannung der Lamellen und Gegenlamellen und der inneren Reibung der Rampeneinrichtung die Hauptkupplung mittels der Rampeneinrichtung verspätet geöffnet werden, so dass bereits ein Schubmoment übertragen wird, wenn die Rampeneinrichtung sich am Nulldurchgang befindet. Um dies zu verhindern, kann die Rampeneinrichtung in Umfangsrichtung so vorgespannt sein, dass derartige Reibmomente kompensiert werden.

Zur Ausbildung einer Einrichtung zur Verhinderung von Stempeln des Hinterrades können die in Schubrichtung wirksamen Rampen mit flacheren Steigungen oder ohne Steigung ausgebildet sein, so dass in Schubrichtung kein Drehmoment an der Hauptkupplung aufgebaut wird und gegebenenfalls die Vorkupplung ein verringertes Schubmoment überträgt, während die Hauptkupplung geöffnet ist. Überschreitet das Schubmoment die maximale Übertragungskapazität der Vorkupplung, rutscht diese durch, so dass eine Drehmomentenbegrenzung an dieser eingestellt werden kann. Hierzu kann auch im Schubbetrieb ein Freilauf zwischen der Lagerung der Vorkupplung auf der Hauptkupplung vorgesehen sein, der in Zugrichtung geöffnet ist und in Schubrichtung sperrt. In Zugrichtung verdreht die geschlossene Vorkupplung die Rampeneinrichtung und schließt damit die Hauptkupplung. In Schubrichtung überträgt infolge fehlender Rampensteigung die Hauptkupplung kein Drehmoment. Der Freilauf zwischen Vorkupplung und Hauptkupplung sperrt in Schubrichtung, so dass die Vorkupplung zwischen dem Eingangsteil wie Kupplungskorb und Ausgangsteil wie Kupplungskern der Hauptkupplung geschaltet wird und Schubmomente bis zu ihrem maximalen Übertragungsmoment auf die Brennkraftmaschine überträgt und danach durchrutscht, so dass eine Verzögerungswirkung durch das Schleppmoment der Brennkraftmaschine zwar auftritt, ein Stempeln des Hinterrads jedoch vermieden wird.

Gemäß einem vorteilhaften Ausführungsbeispiel ist die Vorkupplung verdrehbar auf dem Kupplungskern angeordnet, wobei die Vorkupplung und die Hauptkupplung miteinander mittels der Rampeneinrichtung verbunden sind. Dabei können die Eingangsteile einen einteiligen Kupplungskorb bilden. Alternativ können beide Kupplungen getrennte Kupplungskörbe ausbilden, wobei diese in Umfangsrichtung mittels eines Energiespeichers, beispielsweise einer Druckfeder miteinander wirksam gekoppelt sind.

Gemäß einer alternativen Ausführungsform kann anstatt einer einteiligen Ausführung des Kupplungskorbs für beide Kupplungen die Vorkupplung als Nasskupplung mit einem separaten, mittels eines in Umfangsrichtung wirksamen Energiespeichers mit dem Kupplungskorb der Hauptkupplung verbundenen Kupplungskorb ausgebildet sein.

Gemäß einem weiteren vorteilhaften Ausführungsbeispiel kann die Vorkupplung verdrehbar auf dem Kupplungskorb angeordnet sein, wobei die Vorkupplung und die Hauptkupplung miteinander mittels der Rampeneinrichtung verbunden sind. Gegebenenfalls kann neben einer einteiligen Verbindung die Vorkupplung als Nasskupplung mit einem separaten, mittels eines in Umfangsrichtung wirksamen Energiespeichers mit dem Kupplungskern der Hauptkupplung verbundenen Kupplungskern ausgebildet sein.

Das Hebelelement zur Betätigung der Vorkupplung, das eine Tellerfeder mit Tellerfederzungen sein kann, die radial innen axial verlagert, beispielsweise über ein Ausrücklager von einer beispielsweise mittels eines Seilzugs oder hydrostatisch beaufschlagten Betätigungseinrichtung gezogen oder gedrückt wird, verspannt die Vorkupplung zur Ausbildung eines Reibschlusses axial. Dabei kann sich das Hebelelement axial an einem axial festen Bauteil, beispielsweise dem eigenen Kupplungskorb oder dem Kupplungskern oder dem Kupplungskern oder Kupplungskorb der Hauptkupplung abstützten. Hierbei wird von dem Hebelelement jeweils eine axial begrenzt verlagerbare Eingangslamelle gegen eine axial begrenzt verlagerbare auf den der Vorkupplung zugeordneten Rampenring einwirkende oder diese bildende Ausgangslamelle verspannt. Die der Hauptkupplung zugeordnete Eingangslamelle wird von dem der Hauptkupplung zugeordneten Rampenring verspannt oder durch diesen gebildet. Die Ausgangslamelle der Hauptkupplung ist axial fest mit deren Kupplungskern oder Kupplungskorb verbunden. Nach einem vorteilhaften Ausführungsbeispiel kann das Hebelelement axial zwischen der Eingangslamelle der Vorkupplung und der Ausgangslamelle der Hauptkupplung verspannt sein.

Gemäß einem vorteilhaften Ausführungsbeispiel kann zur Ausbildung einer Einrichtung zur Verhinderung eines Stempels auch komplett ohne Ausbildung eines Schubmoments ausgebildet werden. Hierzu sind in Zugrichtung wirksame Rampen vorgesehen, wobei in Schubrichtung keine Rampen vorgesehen sind und auch keine Anschlagsbegrenzung der Rampeneinrichtung vorgesehen ist, so dass sich im Schubbetrieb der Kupplungskern unbegrenzt gegenüber dem Kupplungskorb verdrehen kann. Hierzu wird beispielsweise eine Rampeneinrichtung vorgeschlagen, bei der Kugeln beispielsweise durch einen Kügelkäfig auf einem vorgegebenen Winkel in Umfangsrichtung fest und radial verlagerbar angeordnet sind und auf einer jeweils in den Rampenringen eingebrachten Ringnut abwälzen. Aus der Ringnut zweigen nach radial außen über den Umfang verteilte, der Winkelverteilung und Anzahl der Kugeln entsprechende, in Umfangsrichtung verlaufende Rampen ab, in die die Kugeln unter Fliehkrafteinfluss verlagert werden. Die komplementär in den beiden Rampenringen angeordneten Rampen beaufschlagen unter Zug die Hauptkupplung und schließen diese. Im Schub fallen bei nachlassender Fliehkraft die Kugeln auf die Ringnut zurück und trennen den Drehschluss der Nasskupplung vollständig.

Alternativ können die Kugeln in Schubrichtung entgegen der Wirkung eines in Umfangsrichtung wirksamen Energiespeichers belastet in einem Rampenring aufgenommen sein und einen gleitenden Kontakt zu einem komplementär hierzu angeordneten Ringteil, das vorzugsweise keine Rampen aufweist, ausbilden.

Die Erfindung wird anhand der in den Figuren 1 bis 23 dargestellten Ausführungsbeispiele näher erläutert. Dabei zeigen:
- Figur 1: einen Teilschnitt durch eine schematisch dargestellte Nasskupplung,
- Figur 2: eine 3-D-Ansicht eines Konstruktionsmodells der Nasskupplung der Figur 1,
- Figur 3: einen Schnitt durch die Nasskupplung der Figur 2,
- Figur 4: eine 3-D-Ansicht eines Druckstücks der Nasskupplung der Figur 2,
- Figur 5: eines 3-D-Ansicht eines Rampenrings der Nasskupplung der Figur 2,
- Figuren 6 bis 6b: verschiedene Betriebszustände der Rampeneinrichtung einer Nasskupplung,
- Figuren 7 bis 17: Teilschnitte weiterer Ausführungsbeispiele von Nasskupplungen in schematischer Darstellung,
- Figuren 18a bis 20b: verschiedene Betriebszustände von gegenüber den Figuren 6 bis 6b veränderten Rampeneinrichtungen,
- Figuren 21 und: eine 3-D-Ansicht eines Rampenrings mit radial außerhalb einer Ringnut angeordneten Rampen
- Figur 22: eine 3-D-Ansicht eines Reibrings mit federbeaufschlagten Auflauf-` rampen für die Kugeln.

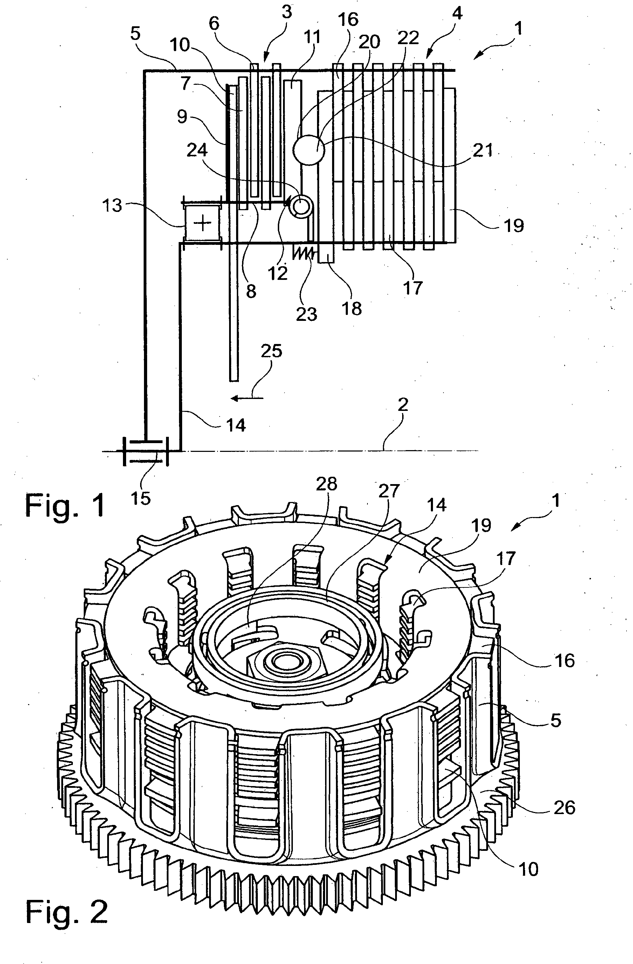

Figur 1 zeigt in schematischer Darstellung den Teilschnitt der um die Drehachse 2 angeordneten Nasskupplung 1 mit der Vorkupplung 3 und der Hauptkupplung 4. Die Vorkupplung 3 enthält die aus den in den antriebsseitig beispielsweise mit der Kurbelwelle verbundenen Kupplungskorb 5 drehfest und axial begrenzt verlagerbar eingehängten Lamellen 6, die beispielsweise aus mit Reibmaterial beschichteten Mitnehmer- oder Reiblamellen gebildet sein können, und die wechselweise mit diesen geschichteten Gegenlamellen 7, die beispielsweise aus Stahl hergestellt sein können. Die Gegenlamellen 7 sind auf dem Kupplungskern 8 der Vorkupplung 3 drehfest und verlagerbar aufgenommen.

Der Kupplungskern 8 bildet an einem axialen Ende den Anschlag 9 für das Hebelelement 10 und nimmt am anderen Ende den Rampenring 11 zur Bildung der Rampeneinrichtung 12 auf. Der Kupplungskem 8 der Vorkupplung 3 ist mittels des Kugellagers 13 auf dem Kupplungskern 14 der Hauptkupplung 4 verdrehbar und axial fest gelagert. Der Kupplungskern 14 ist fest mit der Getriebeeingangswelle 15 verbunden, der Kupplungskorb 5 verdrehbar auf dieser gelagert.

Die Lamellen 16 und Gegenlamellen 17 der Hauptkupplung 4 sind entsprechend der Lamellen 6 und Gegenlamellen 7 der Vorkupplung ausgebildet und wechselweise aufeinander geschichtet drehfest und axial verlagerbar auf dem Kupplungskorb 5 beziehungsweise dem Kupplungskern 14 aufgenommen. Das von diesen gebildete Lamellenpaket wird zwischen dem eingangsseitig angeordneten Rampenring 18 und der ausgangsseitig mit dem Kupplungskern 14 fest verbundenen Ausgangslamelle 19 axial verspannbar angeordnet.

Die Rampeneinrichtung 12 wird durch die Rampenringe 11, 18 sowie den zwischen diesen in den Rampenringen 11, 18 mit komplementären Steigungen versehenen, in Umfangsrichtung ausgerichteten Rampen 20, 21 abrollenden Kugeln 22 gebildet. Der Rampenring 18 wird mittels der an dem Kupplungskern 14 eingehängten Zugfeder 23 axial gegen den Rampenring 11 verspannt.

Im nicht betätigten Zustand der Nasskupplung 1 bildet die Vorkupplung 3 durch die Verspannung der Lamellen 6 und Gegenlamellen 7 mittels des Hebelelements 10, beispielsweise einer Tellerfeder, einen Reibschluss. Bei gestarteter Brennkraftmaschine und damit in Drehung versetztem Kupplungskorb 5 verdreht sich der Kupplungskern 8 auf dem Kugellager 13. Wird durch den Kupplungskern 14 ein Drehmoment entgegen gehalten, beispielsweise bei eingelegtem Gang oder dem Schlupfmoment der Hauptkupplung 4, werden die Rampenringe 11, 18 gegeneinander verdreht, so dass die Kugeln 22 sich auf den in Zugrichtung ansteigenden Rampen 20, 21 abwälzen, wobei sich der Rampenring 18 an dem axial festen Rampenring 11 axial abstützt und die Lamellen 16 und Gegenlamellen 17 durch Verspannen gegen die Ausgangslamelle 19 in Reibeingriff bringt und damit die Hauptkupplung schließt.

Bei einem Lastwechsel in den Schubbetrieb ändert sich die Verdrehung der Rampeneinrichtung 12. Bei in Schubrichtung ebenfalls mit Steigungen versehenen Rampen 20, 21 wird nach einem Nulldurchgang wieder Drehmoment in Schubrichtung aufgebaut. Um den Nulldurchgang der Rampen 20, 21 mit dem Nulldurchgang des Drehmoments auf Deckung zu bringen, wird eine gegebenenfalls durch Reib- und Klemmmomente der Rampeneinrichtung 12 und der Hauptkupplung 4 vorhandene Hysterese des Drehmoments bezogen auf den Nulldurchgang der Rampen 20, 21 durch Vorspannen der Rampeneinrichtung 12 mittels des in. Umfangsrichtung zwischen den Rampenring 11 und dem Kupplungskern 14 angeordneten Energiespeicher 24 kompensiert.

Zum Öffnen der Nasskupplung 1 muss lediglich die Ausrückkraft zum Öffnen der Vorkupplung 3 aufgebracht werden. Hierzu wird das Hebelelement 10 in Richtung des Pfeils 25 beaufschlagt. Hierdurch wird der Reibschluss der Vorkupplung aufgehoben, so dass die axiale Vorspannung des Rampenrings 11 nachlässt und der Rampenring 18 nachfolgend den Reibschluss der Hauptkupplung aufhebt. Die Betätigung der Hauptkupplung 4 erfolgt daher durch Unterstützung der Drehbewegung der Nasskupplung 1 durch die Brennkraftmaschine, so dass diese bei kleinen Ausrückwegen und geringen Betätigungskräften ein hohes Drehmoment übertragen kann.

Figur 2 zeigt die Nasskupplung 1 in einer konstruktiven Ausführungsform als 3-D-Ansicht mit dem Kupplungskorb 5, an dem der Anlasserzahnkranz 26 aufgenommen ist. Zwischen der Ausgangslamelle 19 des Kupplungskerns 14 und dem Kupplungskorb 5 sind die Lamellen 16 und Gegenlamellen 17 geschichtet aufgenommen. Das Hebelelement 10 wird mittels des Ausrücklagers 27 und des Druckstücks 28 axial beaufschlagt.

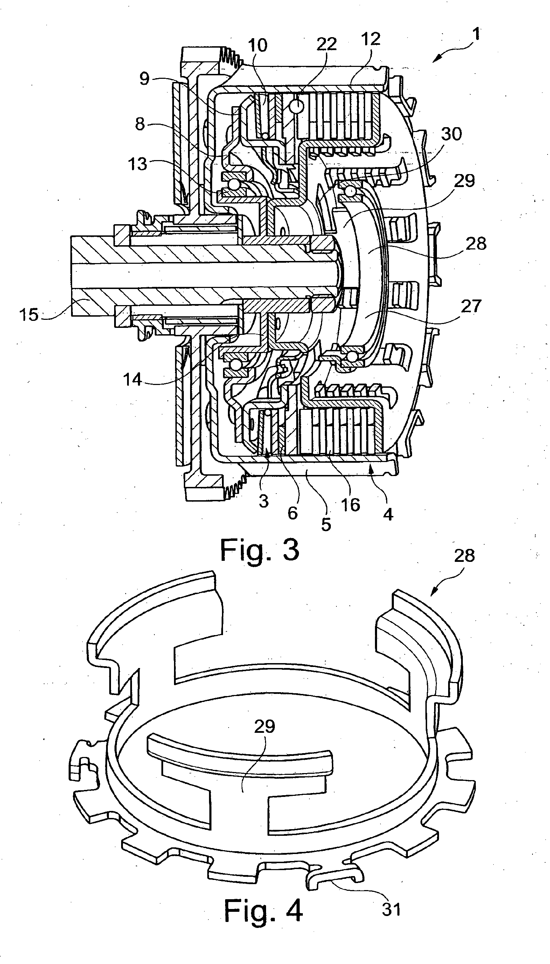

Figur 3 zeigt die Nasskupplung 1 der Figur 2 im Schnitt. Der Kupplungskorb 5 ist verdrehbar auf der Getriebeeingangswelle 15 aufgenommen und nimmt sowohl die Lamellen 6 der Vorkupplung 3 als auch die Lamellen 16 der Hauptkupplung 4 drehfest auf. Der Kupplungskern 14 ist mit der Getriebeeingangswelle 15 drehfest mittels einer Schraube verschraubt und nimmt auf dem Kugellager 13 den Kupplungskern 8 mit dem Anschlag 9 für das Hebelelement 10 auf.

Die Rampeneinrichtung 12 beschränkt den Verdrehwinkel der beiden Kupplungskerne 8, 14 durch die in Umfangsrichtung begrenzten Abrollwinkel der Kugeln 22 auf den Rampen 20,21 (Figur 1), so dass das drehfest mit dem Hebelelement 10 verbundene Druckstück 28 unter Berücksichtigung des Verdrehwinkels zwischen den Kupplungskernen 8, 14 mittels der Ausleger 29 entsprechende ausgenommene Schlitze 30 im Kupplungskern 14 durchgreift und mittels der Ausleger 29 das Ausrücklager 27 aufnimmt.

Figur 4 zeigt das Druckstück 28 der Figuren 2 und 3 in 3-D-Ansicht mit den Auslegern 29 sowie Krallen 31 zur drehfesten Aufnahme an dem Hebelelement 10 (Figur 3).

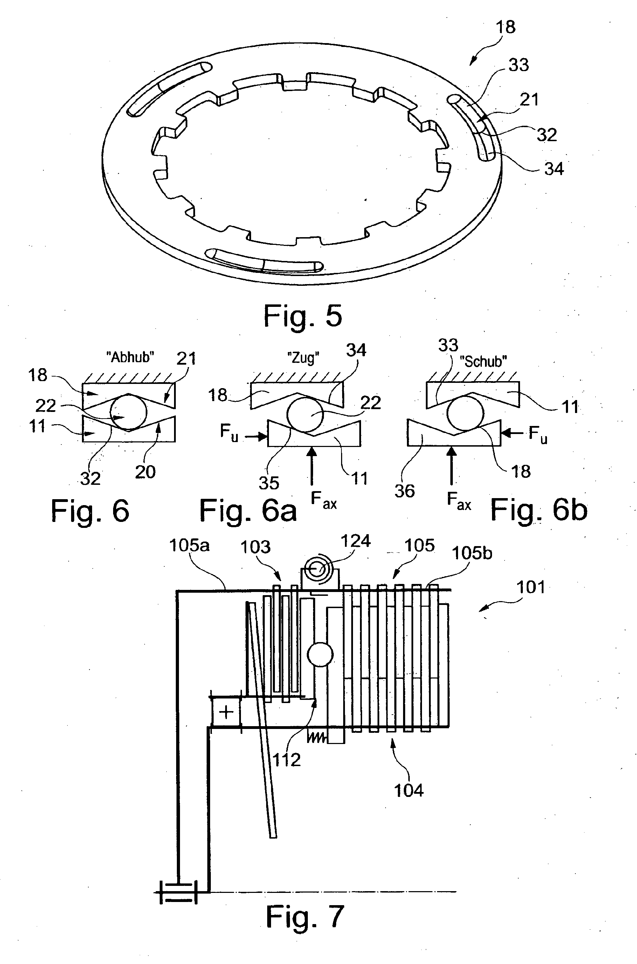

Figur 5 zeigt den Rampenring 18 in konstruktiver Ausführung in 3-D-Ansicht. In den Rampenring 18 sind drei gleichmäßig über den Umfang angeordnete Rampen 21 mit von einer Nulllage 32 in Umfangsrichtung zunehmenden Steigungen 33, 34 eingebracht, in denen die Kugeln 22 der Figur 1 abwälzen.

Die Figuren 6a bis 6b zeigen mit Rückbezug auf Figur 1 die drei Betriebszustände "Abhub" bei geöffneter Vorkupplung 3, "Zug" bei Zugbetrieb mit einem Drehmomentfluss von der Brennkraftmaschine über die Nasskupplung auf die Getriebeeingangswelle 15 und "Schub" bei einem Schubbetrieb mit über die Getriebeeingangswelle 15 übertragenem Drehmomentfluss auf den Kupplungskorb 5 auf die nachgeschaltete Brennkraftmaschine der Rampeneinrichtung 12. Ist die Vorkupplung 3 geöffnet, pendeln sich die Rampenringe 11, 18 im kraftfreien Zustand der Rampeneinrichtung 12 mit auf den Rampen 20, 21 eingestellter Nulllage 32 der Kugeln 22 ein.

Im Betriebszustand "Zug" wird infolge der durch die Axialkraft Fₐₓ der geschlossenen oder sich schließenden Vorkupplung 3 und mittels der am Rampenring 11 wirksamen Umfangskraft Fᵤ die Verdrehung des drehenden Rampenrings 11 gegenüber dem noch stehenden Rampenring 18 über die Kugeln 22 und die Steigungen 34, 35, die den Rampenring 18 axial verlagert, eingeleitet und infolgedessen die Hauptkupplung 4 geschlossen.

Im Betriebszustand "Schub" dreht sich die Umfangskraft Fᵤ um, so dass sich die Rampenringe 11,18 gegeneinander verdrehen und nach einem Nulldurchgang über die Steigungen 33, 36 erneut Drehmoment über die Hauptkupplung 4 übertragen wird.

Figur 7 zeigt die Nasskupplung 101 in schematisch dargestelltem Teilschnitt. Im Unterschied zu der Nasskupplung 1 der Figur 1 ist der Kupplungskorb 105 zweiteilig aus dem Kupplungskorb 105a der Vorkupplung 103 und dem Kupplungskorb 105b der Hauptkupplung 104 gebildet. Zwischen den Kupplungskörben 105a, 105b ist der in Umfangsrichtung wirksame Energiespeicher 124 zur Vorspannung der Rampeneinrichtung 112 in Zugrichtung vorgesehen.

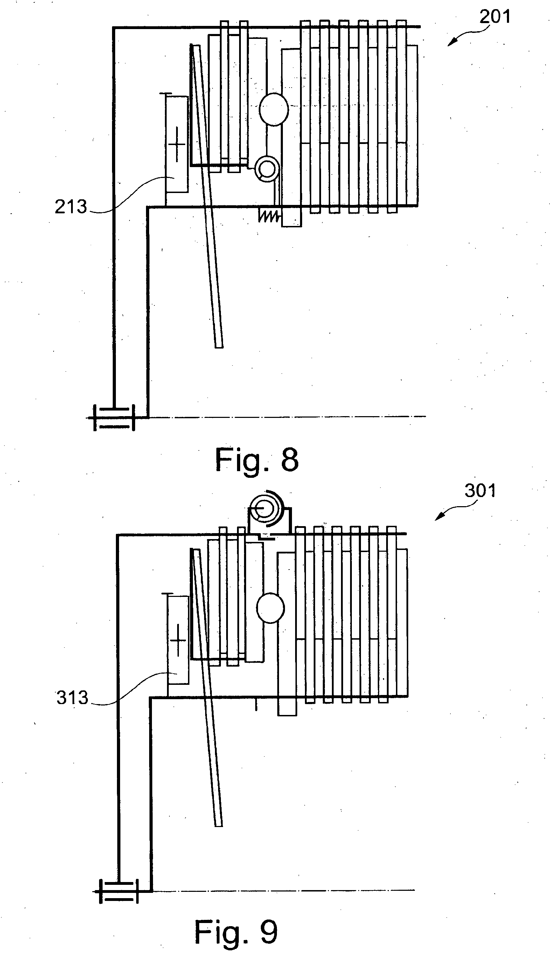

Figur 8 zeigt die Nasskupplung 201 im schematisch dargestellten Teilschnitt. Im Unterschied zu der Nasskupplung 1 ist statt des Kugellagers 13 das Axiallager 213 vorgesehen. Figur 9 zeigt die Anordnung der Nasskupplung 101 der Figur 7, die als Nasskupplung 301 anstatt des Kugellagers das Axiallager 313 enthält.

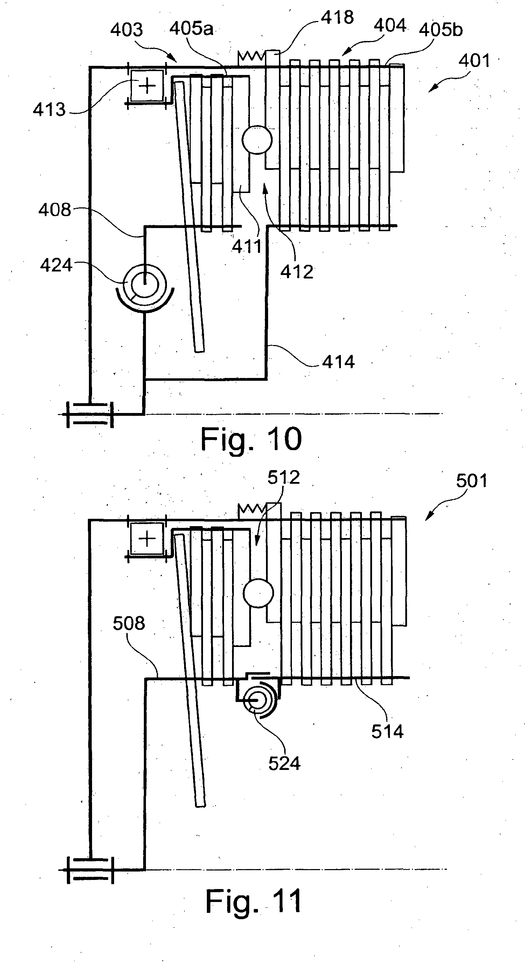

Figur 10 zeigt in Abänderung zu der Nasskupplung 1 der Figur 1 die Nasskupplung 401, deren Rampeneinrichtung 412 aus zwei jeweils in die voneinander getrennten Kupplungskörbe 405a, 405b der Vorkupplung 403 und der Hauptkupplung 404 eingehängten Rampenringe 411, 418 gebildet ist. Die Vorspannung der Rampeneinrichtung 412 in Umfangsrichtung erfolgt mittels des zwischen dem Kupplungskern 408 der Vorkupplung 403 und dem Kupplungskern 414 der Hauptkupplung angeordneten Energiespeichers 424. Die Lagerung des Kupplungskorbs 405a erfolgt dabei mittels des Kugellagers 413 an dem Kupplungskorb 405b.

Figur 11 zeigt im Unterschied zu der Nasskupplung 401 die Nasskupplung 501 mit hintereinandergeschalteten Kupplungskernen 508, 514, die mittels des in Umfangsrichtung wirksamen Energiespeichers 524 zur Vorspannung der Rampeneinrichtung 512 miteinander gekoppelt sind.

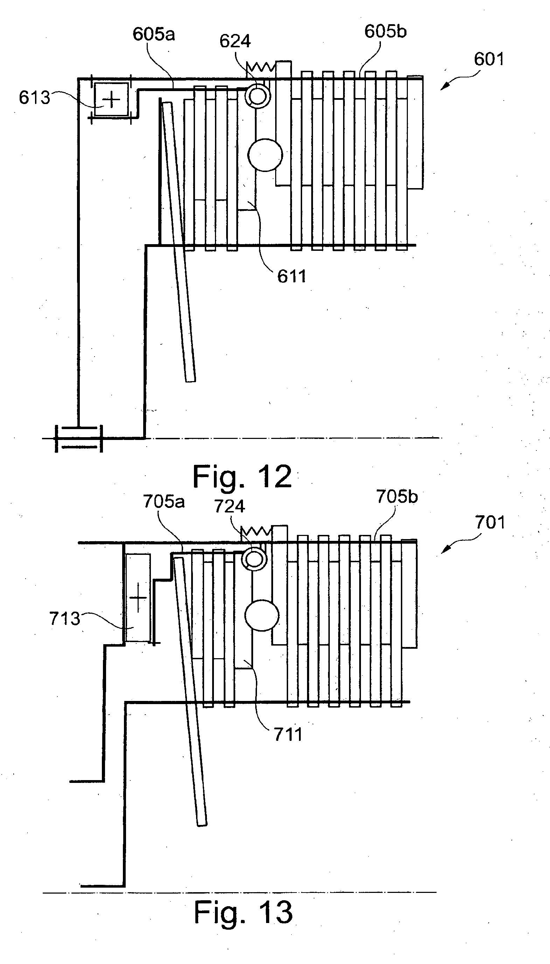

Die Figuren 12 und 13 zeigen die Nasskupplungen 601, 701 im Teilschnitt. Im Unterschied zu der Nasskupplung 401 der Figur 10 ist der Energiespeicher 624 beziehungsweise 724 zwischen dem Kupplungskorb 605b beziehungsweise 705b und dem Rampenringe 611 beziehungsweise 711 angeordnet. Die beiden Nasskupplungen 601 und 701 unterscheiden sich durch das Kugellager 613 beziehungsweise das Axiallager 713 zwischen den Kupplungskörben 605a, 605b beziehungsweise 705a, 705b.

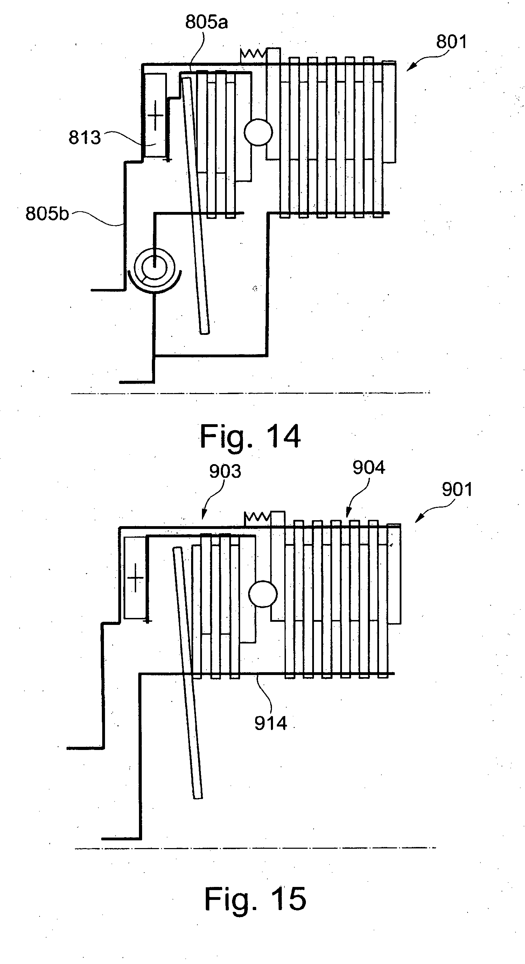

Figur 14 zeigt die zu der Nasskupplung 401 der Figur 10 ähnliche Nasskupplung 801 mit dem Unterschied einer Axiallagerung des Kupplungskorbs 805a gegenüber dem Kupplungskorb 805b mittels des Axiallagers 813.

Im Unterschied zu der Nasskupplung 801 der Figur 14 ist die Nasskupplung 901 mit der Vorkupplung 903 und der Hauptkupplung 904 der Figur 15 mit einem einteiligen Kupplungskern 914 ausgebildet.

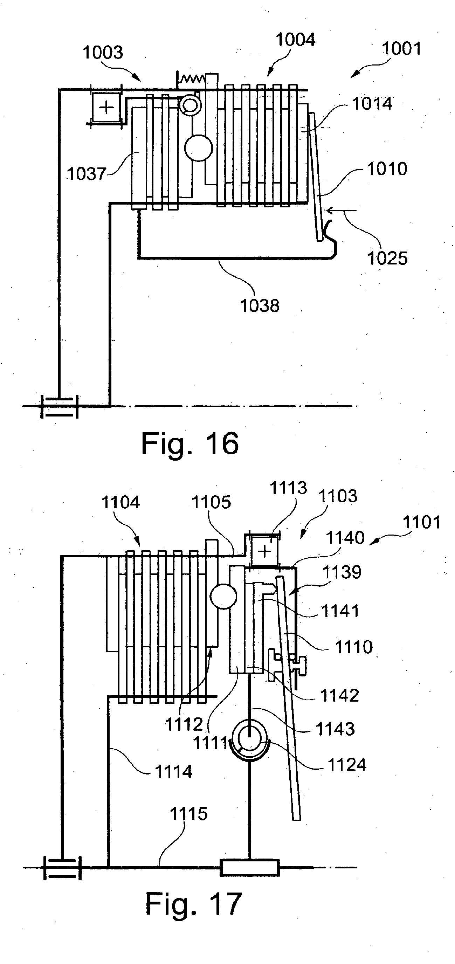

Die Figur 16 zeigt die Nasskupplung 1001 im schematisch dargestellten Teilschnitt. Im Unterschied zu der Nasskupplung 401 der Figur 10 ist das Hebelelement 1010 auf der der Vorkupplung 1003 gegenüberliegenden Seite der Nasskupplung 1001 an der Ausgangslamelle 1014 der Hauptkupplung 1004 abgestützt. Die Übertragung der Vorspannung des Hebelelements 1010 auf die Eingangslamelle 1037 der Vorkupplung erfolgt mittels der Spange 1038, die das Hebelelement radial innen umgreift. Wird das Hebelelement 1010 in Richtung des Pfeils 1025 beaufschlagt, wird die Vorkupplung 1003 geöffnet.

Die Figur 17 zeigt die Nasskupplung 1101 mit der entsprechend der Figuren 1 bis 16 als Nasskupplung ausgeführten Hauptkupplung 1104 und der im Unterschied hierzu als trockene Reibungskupplung 1139 ausgeführten Vorkupplung 1103. Das Eingangsteil 1140 mit dem Rampenring 1111 ist mittels des Kugellagers 1113 mit dem Kupplungskorb 1105 der Hauptkupplung 1104 verdrehbar aufgenommen. Das Hebelelement 1110 stützt sich an dem Eingangsteil 1140 ab und verspannt mittels der Anpressplatte 1141 die Reibbeläge 1142 der Kupplungsscheibe 1143, die drehfest mit der Getriebeeingangswelle 1115 und damit mit dem Kupplungskern 1114 der Hauptkupplung 1104 drehfest verbunden ist. Der in die Kupplungscheibe 1143 intergierte, in Umfangsrichtung wirksame Energiespeicher 1124 spannt die Rampeneinrichtung 1112 in Zugrichtung vor.

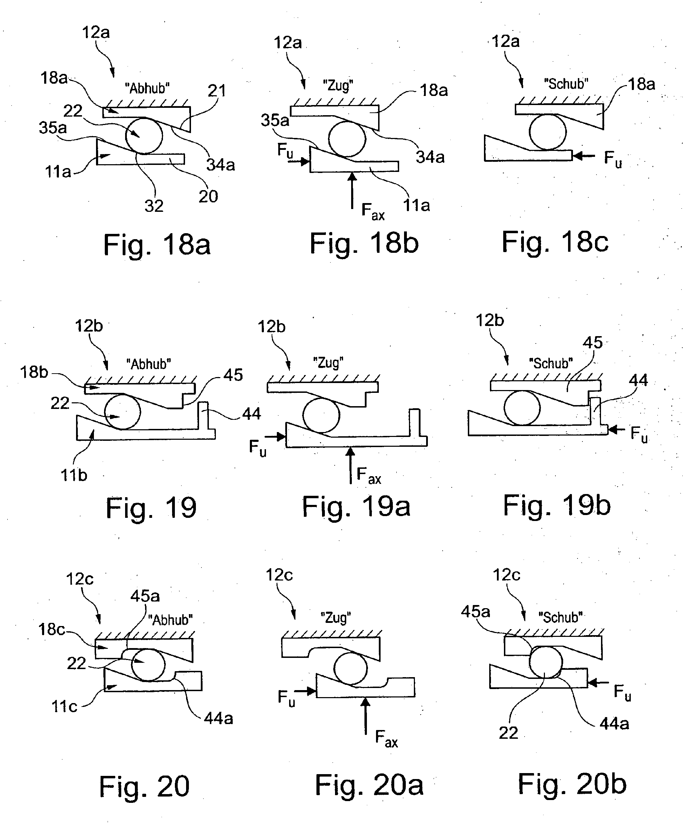

Die Figuren 18a bis 18b zeigen einen den Figuren 6 bis 6b ähnlichen Ausschnitt einer Rampeneinrichtung 12a in den Betriebszuständen "Abhub", "Zug" und "Schub", die zur Verhinde-rung des Stempelns des Hinterrads lediglich Rampen 20, 21 für die Kugeln 22 mit Steigungen 34a, 35a an den Rampenringen 11 a, 18a in Zugrichtung aufweist. Dadurch erfolgt ausgehend von der Nulllage 32 bei geöffneter Vorkupplung im Betriebszustand "Abhub" bei geschlossener Vorkupplung im Betriebszustand "Zug" eine Verdrehung der Rampenringe 11a, 18a entlang der Steigungen 34a, 35a und damit eine axiale Verlagerung des Rampenrings 18a, was zu einer Verspannung der Hauptkupplung mit sich bildendem Reibschluss führt. Im Betriebszustand "Schub" erfolgt aufgrund des Fehlens von Steigungen keine axiale Verlagerung des Rampenrings 18a. Die Hauptkupplung wird daher nicht geschlossen. Es wird lediglich Drehmoment über die Vorkupplung übertragen, so dass die Brennkraftmaschine sanft mit dem gegebenenfalls maximalen, über die Vorkupplung übertragbaren Drehmoment beschleunigt wird. Treten höhere Schubmomente auf, rutscht die Vorkupplung durch. Um den Verdrehwinkel der beiden Rampenringe 11a, 18a in Schubrichtung zu begrenzen, ist das Kugellager 13 einer entsprechend angepassten Nasskupplung der Figur 1 als Freilauf, beispielsweise als Sperrklinken-Freilauf oder Schlingenfeder-Freilauf ausgebildet, der in Zugrichtung geöffnet-ist und in Schubrichtung sperrt. Wird die Nasskupplung in Schubrichtung belastet, wird der Freilauf gesperrt und die Vorsteuerkupplung ist mit dem Kupplungskern und dem Kupplungskorb der Hauptkupplung verbunden. Auf diese Weise wird zuerst das Drehmoment an der Hauptkupplung durch Verdrehen der Rampenringe 11a, 18a in den Betriebszustand "Schub" abgebaut und je nach Schaltzeit des Freilaufs die weitere Verdrehung der Rampeneinrichtung gestoppt.

In Abänderung zu der Rampeneinrichtung 12a der Figuren 18a bis 18b kommen die mit den in den Figuren 19 bis 19b beziehungsweise 20 bis 20b versehenen, ausschnittsweise in den Betriebszuständen "Abhub","Zug", "Schub" dargestellten Rampeneinrichtungen 12b, 12c ohne Freilauf aus und können entsprechend den zuvor gezeigten Ausführungsbeispielen ausgebildet sein. In den Rampeneinrichtungen 12b, 12c wird die Verdrehung der Rampenringe 11 b, 18b beziehungsweise 11 c, 18c im Betriebszustand "Schub" durch die jeweiligen Anschläge 44, 45 beziehungsweise 44a, 45a begrenzt. Die Anschläge 44, 44a, 45, 45a für die Kugeln 22 bewirken bei einem Anschlagen der Kugeln 22 eine Übertragung des Schubmoments auf die Vorkupplung, die das anliegende Schubmoment bis zur maximalen Höhe ihres übertragbaren Drehmoments auf die Brennkraftmaschine überträgt.

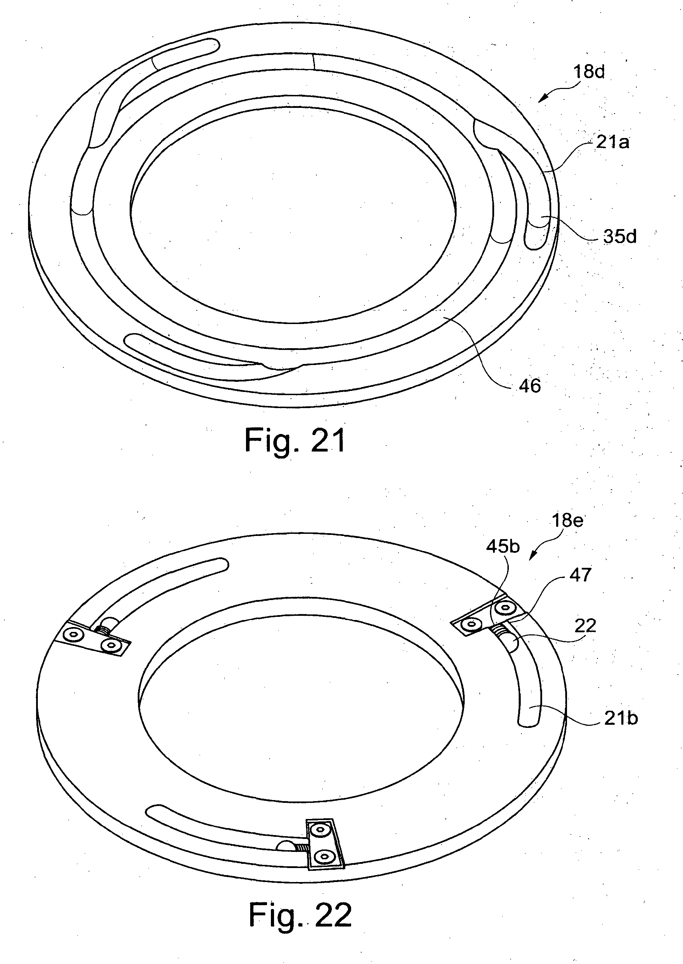

Figur 21 zeigt schematisch einen Rampenring 18d, der in einer beispielsweise gegenüber der Rampeneinrichtung 12 der Figur 1 abgewandelten Rampeneinrichtung paarweise verwendet werden kann, wobei hierzu die nicht dargestellte formschlüssige Übertragung an die jeweilige Position des Rampenrings 18d angepasst wird. Der Rampenring 18d weist eine durchgehende Ringnut 46 auf, auf denen bei Aneinanderlegung zweier Rampenringe 18d die Kugeln abwälzen. Im Zugbetrieb werden die Kugeln, die in einem entsprechenden Kugelkäfig radial verlagerbar und in Umfangsposition gegeneinander festgelegt sind, infolge Fliehkraft nach radial außen in die in Umfangsrichtung mit Steigungen 35b versehenen Rampen 21a verlagert, wodurch im Zugbetrieb eine axiale Verlagerung der beiden Rampenringe 18d erfolgt und die Hauptkupplung eingerückt wird. Im Schubbetrieb fallen die Kugeln auf die Ringnut 46 zurück und wälzen in dieser ab. Hierbei ist zwischen Hauptkupplung und Vorkupplung kein Drehmoment wirksam, so dass die Brennkraftmaschine im Schubbetrieb vollständig von dem Getriebe und damit vom Hinterrad abgekoppelt ist.

Figur 22 zeigt den Rampenring 18e, der zusammen mit einem beispielsweise mit einer Ringnut auf dem Durchmesser der in Umfangsrichtung angeordneten und mit einer Steigung versehenen Rampen 21 b versehenen Ringteil unter Zwischenlegung der Kugeln 22 die entsprechende Rampeneinrichtung bildet. Der Rampenring 18e und das Ringteil sind dabei so axial zueinander beabstandet, dass im Zugbetrieb durch Verdrehung dieser ein Axialhub entlang der Steigungen der Rampen 21b zur Betätigung der Hauptkupplung im Zugbetrieb erfolgt und im Schubbetrieb die Kugeln 22 gegen den mittels der verliersicher in dem Rampenring 18e aufgenommenen Schraubenfeder 47 gedämpften Anschlag 45b bewegt werden und auf der Ringnut des Ringteils gleiten, so dass der Rampenring 18e gegen das Ringteil mit lediglich geringer Reibung verdrehbar ist und die zugehörige Nasskupplung die Brennkraftmaschine im Schubbetrieb im Wesentlichen drehmomentfrei von dem Getriebe trennt.

### Bezugszeichenliste

- 1: Nasskupplung
- 2: Drehachse
- 3: Vorkupplung
- 4: Hauptkupplung
- 5: Kupplungskorb
- 6: Lamelle
- 7: Gegenlamelle
- 8: Kupplungskern
- 9: Anschlag
- 10: Hebelelement
- 11: Rampenring
- 11a: Rampenring
- 11b: Rampenring
- 11c: Rampenring
- 12: Rampeneinrichtung
- 12a: Rampeneinrichtung
- 12b: Rampeneinrichtung
- 12c: Rampeneinrichtung
- 13: Kugellager
- 14: Kupplungskern
- 15: Getriebeeingangswelle
- 16: Lamelle
- 17: Gegenlamelle
- 18: Rampenring
- 18a: Rampenring
- 18b: Rampenring
- 18c: Rampenring
- 18d: Rampenring
- 18e: Rampenring
- 19: Ausgangslamelle
- 20: Rampe
- 21: Rampe
- 21a: Rampe
- 21b: Rampe
- 22: Kugel
- 23: Zugfeder
- 24: Energiespeicher
- 25: Pfeil
- 26: Anlasserzahnkranz
- 27: Ausrücklager
- 28: Druckstück
- 29: Ausleger
- 30: Schlitz
- 31: Kralle
- 32: Nulllage
- 33: Steigung
- 34: Steigung
- 34a: Steigung
- 35: Steigung
- 35a: Steigung
- 35b: Steigung
- 36: Steigung
- 44: Anschlag
- 44a: Anschlag
- 45: Anschlag
- 45a: Anschlag
- 45b: Anschlag
- 46: Ringnut
- 47: Schraubenfeder
- 101: Nasskupplung
- 103: Vorkupplung
- 104: Hauptkupplung
- 105: Kupplungskorb
- 105a: Kupplungskorb
- 105b: Kupplungskorb
- 112: Rampeneinrichtung
- 124: Energiespeicher
- 201: Nasskupplung
- 213: Axiallager
- 301: Nasskupplung
- 313: Axiallager
- 401: Nasskupplung
- 403: Vorkupplung
- 404: Hauptkupplung
- 405a: Kupplungskorb
- 405b: Kupplungskorb
- 408: Kupplungskern
- 411: Rampenring
- 412: Rampeneinrichtung
- 413: Kugellager
- 414: Kupplungskern
- 418: Rampenring
- 424: Energiespeicher
- 501: Nasskupplung
- 508: Kupplungskern
- 512: Rampeneinrichtung
- 514: Kupplungskern
- 524: Energiespeicher
- 601: Nasskupplung
- 605a: Kupplungskorb
- 605b: Kupplungskorb
- 611: Rampenring
- 613: Kugellager
- 624: Energiespeicher
- 701: Nasskupplung
- 705a: Kupplungskorb
- 705b: Kupplungskorb
- 711: Rampenring
- 713: Axiallager
- 724: Energiespeicher
- 801: Nasskupplung
- 805a: Kupplungskorb
- 805b: Kupplungskorb
- 813: Axiallager
- 901: Nasskupplung
- 903: Vorkupplung
- 904: Hauptkupplung
- 914: Kupplungskern
- 1001: Nasskupplung
- 1003: Vorkupplung
- 1004: Hauptkupplung
- 1010: Hebelelement
- 1019: Ausgangslamelle
- 1025: Pfeil
- 1037: Eingangslamelle
- 1038: Spange
- 1101: Nasskupplung
- 1103: Vorkupplung
- 1104: Hauptkupplung
- 1105: Kupplungskorb
- 1110: Hebelelement
- 1111: Rampenring
- 1112: Rampeneinrichtung
- 1113: Kugellager
- 1114: Kupplungskern
- 1115: Getriebeeingangswelle
- 1124: Energiespeicher
- 1139: Reibungskupplung
- 1140: Eingangsteil
- 1141: Anpressplatte
- 1142: Reibbelag
- 1143: Kupplungsscheibe
- Fₐₓ: Axialkraft
- Fᵤ: Umfangskraft

## Patentansprüche

1. Nasskupplung (1, 101, 201, 301, 401, 501, 601, 701, 801, 901, 1001, 1101), angeordnet zwischen einer Kurbelwelle einer Brennkraftmaschine und einer Getriebeeingangswelle (15) eines Getriebes in einem Antriebsstrang insbesondere für ein Motorrad, mit einer Hauptkupplung (4, 104, 404, 904, 1004, 1104) enthaltend einen mit der Kurbelwelle wirksam verbundenen, ein Eingangsteil bildenden Kupplungskorb (5, 105b, 605b, 705b, 805b, 1105) mit drehfest und axial begrenzt verlagerbar in diesem aufgenommenen Lamellen (16) und einem mit der Getriebeeingangswelle (15) verbundenen, ein Ausgangsteil bildenden Kupplungskern (14, 414, 914, 1114) mit abwechselnd mit den Lamellen (16) geschichteten, drehfest und axial begrenzt verlagerbar aufgenommenen Gegenlamellen (17), wobei der Hauptkupplung (4, 404, 904, 1004, 1104) eine mittels eines Hebelelements (10, 1010, 1110) betätigte Vorkupplung (3, 103, 403, 903, 1003, 1103) vorgeschaltet ist und Vorkupplung (3, 103, 403, 903, 1003, 1103) und Hauptkupplung (4, 104, 404, 904, 1004, 1104) mittels einer in Umfangsrichtung mit zumindest in Zugrichtung der Brennkraftmaschine wirksamen Rampen (20, 21, 21a, 21b) versehenen Rampeneinrichtung (12, 12a, 12b, 12c, 112, 412, 512, 1112) miteinander verbunden sind, **dadurch gekennzeichnet, dass** die Vorkupplung (3, 103) verdrehbar auf dem Kupplungskern (14) oder Kupplungskorb (605b, 705b, 805b, 1105) und wirksam in Drehrichtung mit dem Kupplungskorb (5, 105b) bzw. dem Kupplungskern (414, 914, 1114) angeordnet ist und die Vorkupplung (103) als Nasskupplung mit einem separaten, mittels eines in Umfangsrichtung wirksamen Energiespeichers (124) mit dem Kupplungskorb (105b) bzw. Kupplungskern (514) der Hauptkupplung (104) verbundenen Kupplungskorb (105a) bzw. Kupplungskern (508) ausgebildet ist.

2. Nasskupplung (401, 501, 601, 701, 801, 1001, 1101) nach Anspruch 1, **dadurch gekennzeichnet, dass** die Vorkupplung (403, 903, 1003, 1103) verdrehbar auf dem Kupplungskorb (605b, 705b, 805b, 1105) und wirksam in Drehrichtung mit dem Kupplungskern (414, 914, 1114) angeordnet sind.

3. Nasskupplung (401, 501, 801) nach Anspruch 2, **dadurch gekennzeichnet, dass** die Vorkupplung (403) als Nasskupplung mit einem separaten, mittels eines in Umfangsrichtung wirksamen Energiespeichers (424, 524) mit dem Kupplungskern (514) der Hauptkupplung (404) verbundenen Kupplungskern (508) ausgebildet ist.

4. Nasskupplung (1001) nach einem der Ansprüche 1 bis 3, **dadurch gekennzeichnet, dass** das Hebelelement (1010) axial zwischen einer Eingangslamelle der Vorkupplung (1003) und einer Ausgangslamelle (1014) der Hauptkupplung (1004) verspannt ist.

5. Nasskupplung (1, 101, 201, 301, 401, 501, 601, 701, 801, 901, 1001, 1101) nach einem der Ansprüche 1 bis 4, **dadurch gekennzeichnet, dass** die Rampeneinrichtung (12, 12a, 12b, 12c, 112, 412, 512, 1112) aus gegeneinander begrenzt verdrehbaren Rampenringen (11, 11a, 11b, 11c, 411, 611, 711, 1111, 18, 18a, 18b, 18c, 18d, 18e, 418) mit in zumindest eine Umfangsrichtung vorgesehenen, eine zueinander komplementäre Steigung (33, 34, 34a, 35, 35a, 35b, 36) aufweisenden Rampen (20, 21, 21 a, 21 b) vorgesehen ist, in denen jeweils eine Kugel (22) abwälzt.

6. Nasskupplung (1, 101, 201, 301, 401, 501, 601, 701, 801, 901, 1001, 1101) nach Anspruch 5, **dadurch gekennzeichnet, dass** eine Verdrehung der beiden Rampenringe (11a, 11b, 11c, 411, 611, 711, 1111, 18a, 18b, 18c, 18d, 18e, 418) in Schubrichtung ohne Steigung der Rampen (20, 21, 21 a, 21 b) vorgesehen ist.

7. Nasskupplung (1, 101, 201, 301, 401, 501, 601, 701, 801, 901, 1001, 1101) nach Anspruch 5 oder 6, **dadurch gekennzeichnet, dass** die Kugeln (22) in Schubrichtung entgegen der Wirkung einer in Umfangsrichtung wirksamen Schraubenfeder (47),belastet in einem Rampenring (18e) aufgenommen und gleitend gegenüber einem Ringteil angeordnet sind.

8. Nasskupplung (1, 101, 201, 301, 401, 501, 601, 701, 801, 901, 1001, 1101) nach einem der Ansprüche 1 bis 7, **dadurch gekennzeichnet, dass** im Schubbetrieb die Hauptkupplung (4, 104, 404, 904, 1004, 1104) und gegebenenfalls zusätzlich die Vorkupplung (3, 103, 403, 903, 1003, 1103) geöffnet ist.

## Claims

1. Wet clutch (1, 101, 201, 301, 401, 501, 601, 701, 801, 901, 1001, 1101), arranged between a crankshaft of an internal combustion engine and a transmission input shaft (15) of a transmission in a drive train, in particular, for a motorcycle, having a main clutch (4, 104, 404, 904, 1004, 1104) containing a clutch basket (5, 105b, 605b, 705b, 805b, 1105) which is operatively connected to the crankshaft, forms an input part and has discs (16), which are received in the said clutch basket (5, 105b, 605b, 705b, 805b, 1105) fixedly so as to rotate with it and such that they can be displaced axially to a limited extent, and a clutch core (14, 414, 914, 1114) which is connected to the transmission input shaft (15), forms an output part and has counterdiscs (17) which are layered alternately with the discs (16) and are received fixedly in terms of rotation and such that they can be displaced axially to a limited extent, a pre-clutch (3, 103, 403, 903, 1003, 1103) which is actuated by means of a lever element (10, 1010, 1110) being connected upstream of the main clutch (4, 404, 904, 1004, 1104), and the pre-clutch (3, 103, 403, 903, 1003, 1103) and the main clutch (4, 104, 404, 904, 1004, 1104) being connected to one another by means of a ramp device (12, 12a, 12b, 12c, 112, 412, 512, 1112) which is provided in the circumferential direction with ramps (20, 21, 21a, 21b) which act at least in the pulling direction of the internal combustion engine, **characterized in that** the pre-clutch (3, 103) is arranged such that it can be rotated on the clutch core (14) or clutch basket (605b, 705b, 805b, 1105) and is active in the rotational direction with the clutch basket (5, 105b) and the clutch core (414, 914, 1114), and the pre-clutch (103) is configured as a wet clutch with a separate clutch basket (105a) and clutch core (508) which is connected to the clutch basket (105b) and clutch core (514), respectively, of the main clutch (104) by means of an energy store (124) which acts in the circumferential direction.

2. Wet clutch (401, 501, 601, 701, 801, 1001, 1101) according to Claim 1, **characterized in that** the pre-clutch (403, 903, 1003, 1103) is arranged such that it can be rotated on the clutch basket (605b, 705b, 805b, 1105) and is active in the rotational direction with the clutch core (414, 914, 1114).

3. Wet clutch (401, 501, 801) according to Claim 2, **characterized in that** the pre-clutch (403) is configured as a wet clutch with a separate clutch core (508) which is connected to the clutch core (514) of the main clutch (404) by means of an energy store (424, 524) which acts in the circumferential direction.

4. Wet clutch (1001) according to one of Claims 1 to 3, **characterized in that** the lever element (1010) is braced axially between an input disc of the pre-clutch (1003) and an output disc (1014) of the main clutch (1004) .

5. Wet clutch (1, 101, 201, 301, 401, 501, 601, 701, 801, 901, 1001, 1101) according to one of Claims 1 to 4, **characterized in that** the ramp device (12, 12a, 12b, 12c, 112, 412, 512, 1112) comprising ramp rings (11, 11a, 11b, 11c, 411, 611, 711, 1111, 18, 18a, 18b, 18c, 18d, 18e, 418) which can be rotated with respect to one another to a limited extent is provided with ramps (20, 21, 21a, 21b) which are provided in at least one circumferential direction, have a complementary gradient (33, 34, 34a, 35, 35a, 35b, 36) with respect to one another, and in which in each case one ball (22) rolls.

6. Wet clutch (1, 101, 201, 301, 401, 501, 601, 701, 801, 901, 1001, 1101) according to Claim 5, **characterized in that** a rotation of the two ramp rings (11a, 11b, 11c, 411, 611, 711, 1111, 18a, 18b, 18c, 18d, 18e, 418) is provided in the thrust direction without a gradient of the ramps (20, 21, 21a, 21b).

7. Wet clutch (1, 101, 201, 301, 401, 501, 601, 701, 801, 901, 1001, 1101) according to Claim 5 or 6, **characterized in that** the balls (22) are received in a ramp ring (18e) such that they are loaded in the thrust direction counter to the action of a helical spring (47) which acts in the circumferential direction, and are arranged such that they slide with respect to an annular part.

8. Wet clutch (1, 101, 201, 301, 401, 501, 601, 701, 801, 901, 1001, 1101) according to one of Claims 1 to 7, **characterized in that**, in overrun mode, the main clutch (4, 104, 404, 904, 1004, 1104) and optionally additionally the pre-clutch (3, 103, 403, 903, 1003, 1103) are open.

## Revendications

1. Embrayage humide (1, 101, 201, 301, 401, 501, 601, 701, 801, 901, 1001, 1101), disposé entre un vilebrequin d'un moteur à combustion interne et un arbre d'entrée de boîte de vitesses (15) d'une boîte de vitesses dans une chaîne cinématique en particulier pour une motocyclette, comprenant un embrayage principal (4, 104, 404, 904, 1004, 1104) contenant une cloche d'embrayage (5, 105b, 605b, 705b, 805b, 1105) formant une partie d'entrée, connectée fonctionnellement au vilebrequin, avec des disques (16) reçus de manière solidaire en rotation et de manière déplaçable axialement de manière limitée dans celle-ci, et un moyeu d'embrayage (14, 414, 914, 1114) formant une partie de sortie, connecté à l'arbre d'entrée de boîte de vitesses (15), avec des disques conjugués (17) reçus de manière solidaire en rotation et de manière déplaçable axialement de manière limitée, empilés en couches en alternance avec les disques (16), un pré-embrayage (3, 103, 403, 903, 1003, 1103) actionné au moyen d'un élément de levier (10, 1010, 1110) étant monté avant l'embrayage principal (4, 404, 904, 1004, 1104) et le pré-embrayage (3, 103, 403, 903, 1003, 1103) et l'embrayage principal (4, 104, 404, 904, 1004, 1104) étant connectés l'un à l'autre au moyen d'un dispositif de rampe (12, 12a, 12b, 12c, 112, 412, 512, 1112) pourvu dans la direction périphérique de rampes (20, 21, 21a, 21b) agissant au moins dans la direction de traction du moteur à combustion interne, **caractérisé en ce que** le pré-embrayage (3, 103) est disposé de manière rotative sur le moyeu d'embrayage (14) ou la cloche d'embrayage (605b, 705b, 805b, 1105) et de manière à agir dans le sens de rotation avec la cloche d'embrayage (5, 105b) ou le moyeu d'embrayage (414, 914, 1114), et le pré-embrayage (103) est réalisé sous forme d'embrayage humide avec une cloche d'embrayage séparée (105a) ou un moyeu d'embrayage séparé (508) connecté(e) au moyen d'un accumulateur d'énergie (124) agissant dans la direction périphérique à la cloche d'embrayage (105b) ou au moyeu d'embrayage (514) de l'embrayage principal (104).

2. Embrayage humide (401, 501, 601, 701, 801, 1001, 1101) selon la revendication 1, **caractérisé en ce que** le pré-embrayage (403, 903, 1003, 1103) est disposé de manière rotative sur la cloche d'embrayage (605b, 705b, 805b, 1105) et de manière à agir dans le sens de rotation avec le moyeu d'embrayage (414, 914, 1114).

3. Embrayage humide (401, 501, 801) selon la revendication 2, **caractérisé en ce que** le pré-embrayage (403) est réalisé sous forme d'embrayage humide avec un moyeu d'embrayage séparé (508) connecté au moyen d'un accumulateur d'énergie (424, 524) agissant dans la direction périphérique au moyeu d'embrayage (514) de l'embrayage principal (404).

4. Embrayage humide (1001) selon l'une quelconque des revendications 1 à 3, **caractérisé en ce que** l'élément de levier (1010) est serré axialement entre un disque d'entrée du pré-embrayage (1003) et un disque de sortie (1014) de l'embrayage principal (1004).

5. Embrayage humide (1, 101, 201, 301, 401, 501, 601, 701, 801, 901, 1001, 1101) selon l'une quelconque des revendications 1 à 4, **caractérisé en ce que** le dispositif de rampe (12, 12a, 12b, 12c, 112, 412, 512, 1112) constitué de bagues de rampe (11, 11a, 11b, 11c, 411, 611, 711, 1111, 18, 18a, 18b, 18c, 18d, 18e, 418) pouvant tourner de manière limitée les unes par rapport aux autres, est pourvu de rampes (20, 21, 21a, 21b) présentant un pas mutuellement complémentaire (33, 34, 34a, 35, 35a, 35b, 36), prévues dans au moins une direction périphérique, dans lesquelles roule à chaque fois une bille (22).

6. Embrayage humide (1, 101, 201, 301, 401, 501, 601, 701, 801, 901, 1001, 1101) selon la revendication 5, **caractérisé en ce qu'**une rotation des deux bagues de rampe (11a, 11b, 11c, 411, 611, 711, 1111, 18a, 18b, 18c, 18d, 18e, 418) dans la direction de poussée est prévue sans pas des rampes (20, 21, 21a, 21b).

7. Embrayage humide (1, 101, 201, 301, 401, 501, 601, 701, 801, 901, 1001, 1101) selon la revendication 5 ou 6, **caractérisé en ce que** les billes (22) sont reçues dans une bague de rampe (18e) de manière sollicitée dans la direction de poussée à l'encontre de l'action d'un ressort à boudin (47) agissant dans la direction périphérique et sont disposées de manière à glisser par rapport à une partie de bague.

8. Embrayage humide (1, 101, 201, 301, 401, 501, 601, 701, 801, 901, 1001, 1101) selon l'une quelconque des revendications 1 à 7, **caractérisé en ce qu'**en mode de poussée, l'embrayage principal (4, 104, 404, 904, 1004, 1104) et éventuellement en outre le pré-embrayage (3, 103, 403, 903, 1003, 1103) sont ouverts.
